# EUROPEAN PATENT SPECIFICATION

(11) **EP 1 108 659 B1**
(45) Date of publication and mention of the grant of the patent: **17.07.2002**
(21) Application number: 00125101.6
(22) Date of filing: 17.11.2000
(51) Int. Cl.: B65G 17/12, F25D 13/06

(54) **Multiple chain conveyor, particularly for the freezing stage of alimentary ice-creams**
Mehrfach-Ketten-Förderer, insbesondere für das Gefrieren von Speiseeis
Convoyeur multiple à chaine, particulièrement pour la congélation de crème glacée

(30) Priority: 15.12.1999 IT BO990682
(43) Date of publication of application: 20.06.2001
(73) Proprietor: VORTEX SYSTEMS S.r.L., I-44030 Fossalta di Copparo Ferrara (IT)
(72) Inventor: Colamussi, Arturo, 44030 Fossalta, Province of Ferrara (IT)
(74) Representative: Porsia, Attilio, Dr.

(56) References cited:
- US-A- 4 669 278

## Description

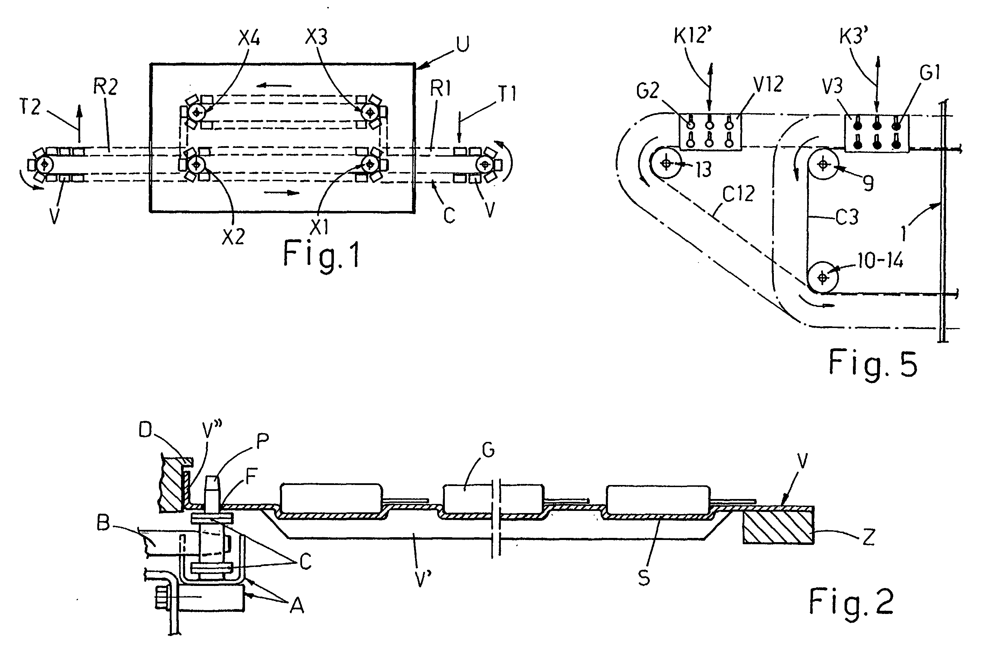

During the production of alimentary ice-creams, usually of extruded ice-screams, with or without the stick, it is know to arrange the ice portions to be hardened by a freezing stage on horizontal trays, generally constituted by square panels of stainless steel plates, provided or not with the impressions for the containment of said ice portions, that at one side rest and slide on a fixed guide and at the opposing side are connected to the pins of a chain, constrained to follow a closed and controlled pathway. In the figure 1 of the enclosed drawings, the plan pathway of the chain with its trays is diagrammatically illustrated in equipment of known type. The trays V are brought by the chain C along a first rectilinear pathway R1 near an extruding and cutting station T1, that arranges the ices above the same trays in continuous movement, thereafter the loaded trays enter a freezing chamber U where perform a first longitudinal ascending spiral pathway and then a second longitudinal descending spiral pathway, between a first and a second pair of vertically aligned pinion sets X1, X2, X3, X4, two of which are connected to motion means, not represented, whereas the other two pinion sets are idle and controlled by straining means, such as springs or counterweights, in order to ensure the desirable stretching of the various chain sections. At the end of said descending spiral pathway, the chain exits the freezing chamber and brings the trays along a rectilinear pathway R2 near a station T2 that provides for unloading the ices from the trays and transfers the same ices to a next station of the equipment. The trays cleared from the ice re-enter eventually the freezing chamber, at the lower level, pass through it longitudinally and exit from the opposing side of the same chamber, in order to transit near said extruding and cutting station T1 and repeat the described cycle.

Such equipment, as actually conceived (see e.g. US 46692278), has capacity limitations in the meaning of product number for time unit and that is due to physical limitations such as the chain speed with respect to the loading and unloading stations, the centrifugal accelerations suffered by the product at the sections of sudden change of direction when the trays are redirected around the pinions, and the dimensions of the same trays. The capacity growth, up to its doubling, on single equipment, should be an important objective to be achieved, since it should decrease the impact of the costs, for manpower, services, industrial area and so on. In order to achieve this objective, without modifying the dimensions of the trays, taking the maximum advantage from the dimensions of the freezing chamber and possibly designing this in appropriate manner so as to obtain a doubled production while maintaining the same transit speed of the same trays into said chamber, or to obtain a higher production or also equal but at a lower or ever halved transit speed of the trays with respect to that of the known technology, with the advantage of a more soft product treatment during the loading and unloading stage, the invention suggests the following solution concept. Instead by using a single chain, two or more closed chains, properly mutually alternated and superimposed, are used each of which hauls its own closed row of trays. At the entry and exit of the freezing chamber, the two rows of trays are arranged so as to perform different pathways, for example of different length, with a longer pathway for the trays placed at the lower level, so that these bring themselves in sight and are accessible for the loading and unloading operations, simultaneously with the trays at the upper level.

More features of the invention, and the resulting advantages, will appear clearly from the following description of a preferred embodiment form thereof, explained with merely exemplifying and not restrictive purpose, in the figures of the enclosed tables of the drawings, wherein:
- Fig. 1 is a sketched plan view of a freezing device with a single chain, carried out with the known technology;
- Fig. 2 illustrates, laterally and with some parts in section, the constraining of a tray to the relative hauling and guiding means;
- Fig. 3 and 4 are respectively plan and perspective sketched views of a multiple chain conveyor according to the invention;
- Fig. 5 illustrates diagrammatically and in plan a variant in the redirection of the conveying chains downstream to the freezing chamber.

In the figure 2 the tray of known type is denoted by V, usually made of stainless steel, provided or not with seats S where the ices G are housed, horizontally arranged, supported at a side by a fixed guide Z and that, at the opposing side, is provided with at least a pair of holes or slots F engaged by corresponding pins P fixed to the links of a roller chain C, preferably of long pitch type, that with the rollers in vertical position slides into a fixed guide A and co-operates with idle or hauling pinions B. At the sides perpendicular to the chain, the tray V is provided with wind V' folded downwards and is provided at the side near the holes F with a wind V'', folded upwards, having the function, with the previous wind, of conferring an improved bending strength on the same tray, both in longitudinal and in transversal direction. The wind V'' is surmounted by a fixed guide D that holds the tray in the right co-operation with the hauling chain and prevents the whole from accomplishing vertical swings.

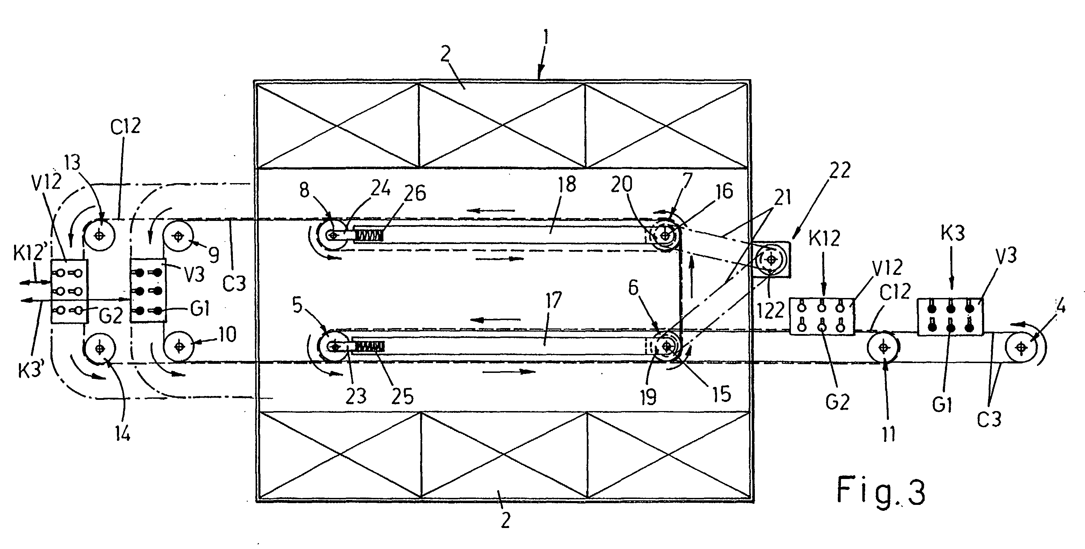

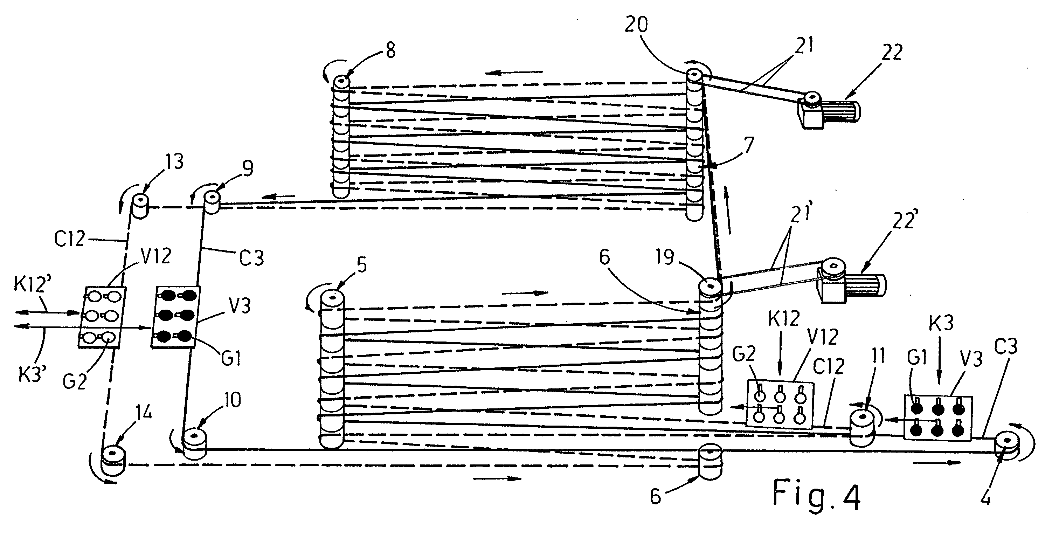

In the figures 3 and 4, the freezing chamber is denoted by 1, usually provided with the cooling means 2 with enforced air circulation, placed near the longitudinal walls. A first chain C3, of the type illustrated by C in figure 2, is redirected around a pinion 4 with vertical axis placed outside the chamber 1, at one of its sides, and trays V3, of the type V in figure 1, are linked to said chain, that, by following a rectilinear pathway, enter said chamber 1, pass through it along the whole length and, with the chain hauling them, are redirected in counterclockwise direction around the lower portion of a set or vertical row of pinions 5, after which the same chain C3 with the trays comes back and is redirected in counterclockwise direction around the lower portion of a set or vertical row of pinions 6, and the pathway of the same chain with the trays goes on with an ascending spiral course on the same rows of pinions 5 and 6. The chain C3 with the trays V3 exits at the upper portion of the pinion row 6, passes transversally through the freezing chamber 1 and is redirected with counterclockwise rotation at the upper portion of a further set or vertical row of pinions 7 and then carries out a descending spiral pathway between this row of pinions and a further set or vertical row of pinions 8, also rotating in counterclockwise direction. By exiting from the lower portion of the pinions 7, the chain C3 with relative trays V3 passes through the chamber 1 in longitudinal direction and exit from such chamber, at the side facing the entry, where substantially aligned to the rows of pinions 7, 8 and 5, 6, respective pinions with vertical axis, 9, 10 are provided, around which the chain C3 performs a rotation of 90° in order to enter again then the chamber 1, pass through it longitudinally and exit therefrom for the redirection around the pinion 4. The trays V3 are loaded with ice G1 at a station K3 placed immediately after the pinion 4, where a first extruding and cutting unit (not represented) is operating, whereas they are unloaded by a device (not represented) operating in the station K3', placed, for example, on the section of the chain pathway going from the pinion 9 to 10 (see subsequent variants).

From the figures 3 and 4, it is noticed that, below the pinion 4 a pinion 11, with vertical axis, is provided, onto which a long pitch chain C12 is redirected, placed above the chain C3 and to which a respective row of trays V12 is secured, similar to those V3, that are filled at a loading station K12 by a respective extruding and cutting unit (not represented). It is obvious that the loading operation of the trays V3 and V12 can be carried out at the same time, since in the section between the pinions 4 and 11, the trays V3 of the chain C3 are in sight similarly to the trays V12 placed below the pinion 11. The chain C12 with the trays V12 enters the freezing chamber 1 and carries out an ascending spiral pathway around the rows of pinions 5, 6, alternated to the also spiral ascending pathway of the chain C3. The same chain C12 exits at the upper portion of the pinion row 6, passes transversally through the freezing chamber and arrives at the pinion row 7 in order to carry out a spiral descending pathway between the pinion rows 7 and 8, alternated to the also spiral descending pathway of the chain C3. After the redirection around the lower portion of the pinion row 7, the chain C12 passes longitudinally through the freezing chamber 1, under the chain 3 (wrong, correct C3 translator's note) and, like this, exits from the same chamber 1 in order to go on beyond the pinion 9 so as to bring in sight the trays V12 in order to allow the unloading of their frozen products. The chain C12 is for example redirected by 90° around a pinion 13 substantially aligned to the pinions 9, 8, 7, then it is further redirected by 90° around a pinion 14, substantially aligned with the pinions 10, 5, 6, in order to enter again then the chamber 1 under the chain 3 (wrong, correct C3 translator's note), for the redirection around the lower portion of the pinion row 6, then for the rotation around the pinion row 5, after which the same chain C12 exits from the chamber 1 above the chain 3 (wrong, correct C3 translator's note) and is redirected around the external pinion 11. During the passage between the pinion 13 and the pinion 14, the trays V12 are in sight and are unloaded at a station K12' (see subsequent variants).

In the figure 3 it is noted that the sets of pinions 6 and 7 are of equal diameter and are fitted onto common vertical shafts 15 and 16 supported in rotating manner by the structures 17 and 18 placed between the spiral pathways, said shafts being connected, by pinions 19, 20 of equal diameter and chains 21, to the output pinion 122 of a common motor reducer 22 arranged in any suitable position, outside or inside the chamber 1. According to the variant shown in figure 4, two moving groups 22, 22' are provided in order to operate selectively the sets of pinions 6 and 7 through the respective transmissions 19, 21' and 20, 21 so that, when necessary, the chains C3 and C12 can advance with different speeds. The pinions of the sets 5 and 8 are instead mounted on the said supporting structures 17 and 18 by means of respective horizontal slides 23, 24, preloaded by elastic means or counterweights 25, 26 in order to ensure the necessary tensioning of the different branches of the chains C3 and C12.

Figure 5 indicates that the unloading stations K3' and K12' can be placed in a different way on the side of the branches of the chains C3 and C12 that exit from the chamber 1 and are diverted by the pinions 9, 13, all that being easy to understand and carried out by the technicians of the field.

It is understood that the description has been referred to a preferred embodiment form of the invention, to which a multiplicity of variants and changes can be brought, mainly of constructive type, that can refer, for example, to the use of pinion sets otherwise arranged and oriented with respect to the vertical set of pinions 5, 6, 7, 8 illustrated in the drawings, in order to better meet the redirection of slanting branches of the chains. Other variants can refer to the use of conveying means different from the chains, or to a redirection of the chains at the inlet and/or the outlet in and from the freezing chamber and/or in the same freezing room, different from that illustrated in the drawings, all that without exiting, inter alia, from the scope of the invention, as above explained and in the following claimed.

## Claims

1. Conveyor for conveying into a treatment chamber (1), for example for freezing, closed rows of horizontal trays (V), at one side secured to a conveying chain (C) and at the other side sliding on a supporting guide (Z) and that, before the entry into said chamber and at the exit from it, are loaded respectively unloaded with products (G) to be treated, for example with alimentary ice-creams suitable to be properly treated by the freezing process, conveyor of the type that includes, into the freezing chamber, sets or vertical rows of pinions (5-6, 7-8) arranged in pairs at the sides of the same chamber and that includs means by which the same chain with the trays enters at the lower portion of said chamber and follows an ascending spiral pathway between the first pair of pinion rows (5, 6) and then passes on the second pair of pinion rows (7, 8) in order to follow a descending spiral pathway, in order to exit eventually at a lower position from the same freezing chamber, conveyor of such type **characterized in that**, it includes two or more chains or other suitable transport means (C3, C12), ring-shaped closed, superimposed each other and preferably with a long pitch, to which closed rows of trays (V3, V12) are linked, being provided that, before entering said chamber (1), the chains (C3, C12) are redirected around respective vertical axis pinions (4, 11) in order to follow different pathways, for example a longer pathway for the lower chain (C3), so that, by passing near respective stations (K3, K12), the trays (V3) of the same lower chain (C3) can be loaded with product (G1) in phase with the loading of product (G2) onto the trays (V12) of the upper chain (C12), being provided that the two chains perform, alternated and superimposed, an ascending spiral pathway onto the first pair of vertical pinion rows (5, 6) and then a descending spiral pathway onto the other pair of vertical pinion rows (7, 8) internal to the freezing chamber, in order to exit, both ones, from the lower portion of said chamber (1) wherein, through redirection around vertical axis pinions (9, 10, 13, 14), they are brought in different pathways, for example of different length, before re-entering the same freezing chamber, so that the lower chain follows the longer pathway in order to bring in sight its own trays (V12) for allowing the unloading in a station (K12') of the products (G2) in phase with the unloading in a station (K3') of the products (G1) from the trays (V3) of the upper chain (C3), being provided that the two chains pass then longitudinally through the freezing chamber (1) in order to come back to the redirection around the pinions (4, 11) upstream to the loading stations (K3, K12).

2. Conveyor according to claim 1, **characterized in that** the closed chains (C3, C12) for the transport of the trays (V3, V12) are redirected so that the same chains exit from the freezing chamber (1) with a reversed superimposition, being provided that the chain (C3) exiting at the upper position re-enters the freezing chamber and immediately exits from it in order to be redirected around the pinion (4) upstream to the loading station (K3), whereas the chain (C12), exiting at the lower position, re-renters the freezing chamber (1), passes through it longitudinally with redirection at the lower portion of the first pair of vertical pinion rows (5, 6) in order to arrange itself above the other chain (C3) and exit in such condition from the chamber (1) for the redirection around the pinion (11) upstream to the loading station (K12).

3. Conveyor according to preceding claims, **characterized in that**, the vertical pinion rows (6, 7) internal to the freezing chamber (1) are fitted on common vertical shafts (15, 16), connected by a positive transmission of motion (19-21) to a centralized motor-reducer (22), whereas the pinions of the other vertical rows (5, 8) internal to said chamber, are mounted on respective sliders (23, 24) supported, with the possibility of sliding horizontally, by the supporting structures (17, 18) internal to the spiral pathways of the chains, and said sliders being pushed by respective elastic means or counterweight systems (25, 26) straining the various branches of the chains (C3, C12).

4. Conveyor according to claim 3, **characterized in that**, according to a constructive variant, the vertical pinion rows(6, 7) are actuated by means of respective positive transmissions of motion (19, 21' e 20, 21) by corresponding motor-reducers (22, 22') so that the chains (C3, C12) can advance with different speeds.

5. Conveyor according to claim 1, **characterized in that**, the chains (C3, C12) at the exit from the freezing chamber (1), are redirected in such a manner that the trays (V3) of a chain result parallel or substantially parallel to those (V12) of the other chain and that in such condition the same trays are engaged by the respective unloading stations (K3', K12').

6. Conveyor according to claim 1, **characterized in that**, the chains (C3, C12) at the exit from the freezing chamber (1) are redirected so that the trays (V3) of a chain result in line or substantially in line with those (V12) of the other chain and so that in this condition the same trays are engaged by the respective unloading stations (K3', K12').

## Patentansprüche

1. Förderer zum Befördern in eine Bearbeitungskammer (1), zum Beispiel zum Gefrieren, mit geschlossenen Reihen horizontaler Schalen (V), die an einer Seite an einer Förder-Kette (C) befestigt sind und an der anderen Seite auf einer Trageschiene (Z) gleiten, und welche, vor dem Eintritt in diese Kammer und an deren Ausgang, mit den zu bearbeitenden Produkten (G) beladen bzw. entladen werden, zum Beispiel mit Speiseeiscremes, die geeignet sind, durch das Gefrierverfahren sachgemäß bearbeitet zu werden, ein Förderer des Typs, der in der Gefrierkammer Gruppen oder senkrechte Reihen von Ritzeln (5-6, 7-8) umfasst, die paarweise an den Seiten dieser Kammer angeordnet sind, und der Mittel umfasst, durch die diese Kette mit den Schalen am unteren Teil der Kammer hineinfährt und einer aufsteigenden spiralförmigen Bahn zwischen dem ersten Paar Ritzelreihen (5, 6) folgt und dann auf das zweite Paar Ritzelreihen (7, 8) übergeht, um einer absteigenden spiralförmigen Bahn zu folgen, um schließlich in einer tieferen Position aus dieser Gefrierkammer auszutreten, ein Förderer solchen Typs, der **dadurch gekennzeichnet ist, dass** er zwei oder mehr Ketten oder andere geeignete Transportmittel (C3, C12), ringförmig geschlossen, umfasst, die übereinander angeordnet sind und vorzugsweise eine lange Teilung besitzen, an welchen geschlossene Reihen von Schalen (V3, V12) befestigt sind, wobei vorgesehen ist, dass die Ketten (C3, C12) vor ihrem Eintritt in die Kammer jeweils um Ritzel (4, 11) mit vertikaler Achse herum umgeleitet werden, um verschiedenen Bahnen zu folgen, zum Beispiel einer längeren Bahn für die untere Kette (C3), so dass die Schalen (V3) dieser unteren Kette mit dem Produkt (G1) beladen werden können, wenn sie nahe an den jeweiligen Stationen (K3, K12) vorbeilaufen, phasengleich mit dem Laden des Produkts (G2) in die Schalen (V12) der oberen Kette (C12), wobei vorgesehen ist, dass die zwei Ketten, im Inneren der Gefrierkammer wechselweise und übereinander angeordnet, eine aufsteigende spiralförmige Bahn an dem ersten Paar vertikaler Ritzelreihen (5, 6) bilden und dann eine absteigende spiralförmige Bahn an dem anderen Paar vertikaler Ritzelreihen (7, 8) bilden, damit beide aus dem unteren Teil der Kammer (1) herauskommen, wobei sie durch Umleiten um Ritzel (9, 10, 13, 14) mit vertikaler Achse auf verschiedene Bahnen, zum Beispiel mit verschiedener Länge, gelenkt werden, bevor sie wieder in die Gefrierkammer einfahren, so dass die untere Kette der längeren Bahn folgt, um ihre eigenen Schalen (V12) in Position zu bringen, um die Entladung der Produkte (G2) in einer Station (K12') phasengleich mit der Entladung der Produkte (G1) in einer Station (K3') aus den Schalen (V3) der oberen Kette (C3) zu ermöglichen, wobei vorgesehen ist, dass die zwei Ketten dann in Längsrichtung durch die Gefrierkammer (1) laufen, um zur Umleitung um die Ritzel (4, 11) zurückzukommen, die stromaufwärts von den Füllstationen (K3, K12) liegen.

2. Förderer nach Anspruch 1, **dadurch gekennzeichnet, dass** die geschlossenen Ketten (C3, C12) zum Transport der Schalen (V3, V12) so umgeleitet werden, dass diese Ketten aus der Gefrierkammer (1) in umgekehrter Übereinander-Anordnung austreten, wobei vorgesehen ist, dass die Kette (C3), die an der oberen Position austritt, wieder in die Gefrierkammer hineinläuft und sofort aus ihr herauskommt, um stromaufwärts von der Füllstation (K3) um das Ritzel (4) herum umgeleitet zu werden, während die Kette (C12), die an der unteren Position austritt, wieder in die Gefrierkammer (1) hineinläuft, sie in Längsrichtung durchläuft mit Umleitung am unteren Teil des ersten Paares der vertikalen Reihen (5, 6), um sich oberhalb der anderen Kette (C3) anzuordnen und aus der Kammer (1) in der Weise herauszulaufen, dass sie um das Ritzel (11) stromaufwärts von der Füllstation (K12) herum umgeleitet wird.

3. Förderer nach den vorhergehenden Ansprüchen, **dadurch gekennzeichnet, dass** die vertikalen Ritzelreihen (6, 7) im Inneren der Gefrierkammer (1) auf gemeinsame vertikale Wellen (15, 16) montiert sind, die durch eine kraftschlüssige Bewegungsübertragung (19-21) mit einem zentralen Reduziergetriebe (22) verbunden sind, während die Ritzel der anderen vertikalen Reihen (5, 8) im Inneren der Kammer jeweils auf Gleitern (23, 24) montiert sind, die, mit der Möglichkeit, horizontal zu gleiten, im Inneren der spiralförmigen Bahnen der Ketten von Tragstrukturen (17, 18) getragen werden, wobei diese Gleiter jeweils von elastischen Mitteln oder Gegengewichts-Systemen (25, 26) weggedrückt werden, und so die verschiedenen Zweige der Ketten (C3, C12) spannen.

4. Förderer nach Anspruch 3, **dadurch gekennzeichnet, dass** die vertikalen Ritzelreihen (6, 7), nach einer Konstruktionsvariante), in Gang gesetzt werden vermittels jeweiliger positiver (formschlüssiger) Bewegungsübertragungen (19, 21' e(?) 20, 21) durch entsprechende motor-reducers (22, 22'), so dass die Ketten (C3, C12) mit verschiedener Geschwindigkeit vorrücken können.

5. Förderer nach Anspruch 1, **dadurch gekennzeichnet, dass** die Ketten (C3, C12) beim Austritt aus der Gefrierkammer (1) in der Weise umgeleitet werden, dass die Schalen (V3) einer Kette parallel oder deutlich (im wesentlichen) parallel zu denjenigen (V12) der anderen Kette liegen, und dass in dieser Lage die gleichen (?) Schalen von den jeweiligen Entleerungsstationen (K3', K12') erfasst werden.

6. Förderer nach Anspruch 1, **dadurch gekennzeichnet, dass** die Ketten (C3, C12) beim Austritt aus der Gefrierkammer (1) so umgeleitet werden, dass die Schalen (V3) einer Kette in einer Reihe oder deutlich (im wesentlichen) in einer Reihe mit denjenigen (V12) der anderen Kette liegen, und dass in dieser Lage die gleichen Schalen von den jeweiligen Entleerungsstationen (K3', K12') erfasst werden.

## Revendications

1. Transporteur destiné à transporter dans une chambre de traitement (1), par exemple en vue d'une congélation, des rangées fermées de plateaux horizontaux (V), au niveau d'un côté fixé à une chaîne de transport (C) et au niveau de l'autre côté glissant sur un guide de support (Z) et qui, avant l'entrée dans ladite chambre et à la sortie de celle-ci, sont chargés et respectivement déchargés de produits (G) devant être traités, par exemple avec des glaces alimentaires appropriées pour être traitées correctement par le processus de congélation, transporteur du type qui comprend, dans la chambre de congélation, des ensembles ou rangées verticales de pignons (5 et 6, 7 et 8) agencés en paires au niveau des côtés de la même chambre et qui comprend un moyen grâce auquel la même chaîne comportant les plateaux entre au niveau de la partie inférieure de ladite chambre et suit un trajet en spirale ascendant entre la première paire de rangées de pignons (5, 6) et passe ensuite sur la seconde paire de rangées de pignons (7, 8) de manière à suivre un trajet en spirale descendant, de manière à sortir finalement au niveau d'une position inférieure par rapport à la même chambre de congélation, transporteur d'un tel type **caractérisé en ce qu'**il comprend deux ou plusieurs chaînes ou autres moyens de transport appropriés (C3, C12), fermées en forme d'anneaux, superposés les uns sur les autres et de préférence avec un long pas, auxquels des rangées fermées de plateaux (V3, V12) sont liées, à condition que, avant d'entrer dans ladite chambre (1), les chaînes (C3, C12) soient redirigées autour de pignons d'axe vertical respectifs (4, 11) de manière à suivre des trajets différents, par exemple un trajet plus long pour la chaîne inférieure (C3), de sorte qu'en passant à proximité des postes respectifs (K3, K12), les plateaux (V3) de la même chaîne inférieure (C3) peuvent être chargés avec un produit (G1) en phase avec le chargement du produit (G2) sur les plateaux (V12) de la chaîne supérieure (C12), à condition que les deux chaînes exécutent, alternées et superposées, un trajet en spirale ascendant sur la première paire de rangées de pignons verticales (5, 6) et ensuite un trajet en spirale descendant sur l'autre paire de rangées de pignons verticales (7, 8) interne à la chambre de congélation, de manière à sortir, toutes les deux, de la partie inférieure de ladite chambre (1) dans laquelle, par l'intermédiaire d'un changement de direction autour des pignons d'axe vertical (9, 10, 13, 14), elles sont amenées dans des trajets différents, par exemple de longueur différente, avant de réentrer dans la même chambre de congélation, de sorte que la chaîne inférieure suit le trajet plus long de manière à faire apparaître ses propres plateaux (V12) en vue de permettre le déchargement dans un poste (K12') des produits (G2) en phase avec le déchargement dans un poste (K3') des produits (G1) depuis les plateaux (V3) de la chaîne supérieure (C3), à condition que les deux chaînes passent ensuite longitudinalement à travers la chambre de congélation (1) de manière à revenir au changement de direction autour des pignons (4, 11) en amont vers les postes de chargement (K3, K12).

2. Transporteur selon la revendication 1, **caractérisé en ce que** les chaînes fermées (C3, C12) en vue du transport des plateaux (V3, V2) sont redirigées de sorte que les mêmes chaînes sortent de la chambre de congélation (1) avec une superposition inversée, à condition que la chaîne (C3) sortant au niveau de la position supérieure réentre dans la chambre de congélation et sorte immédiatement de celle-ci de manière à être redirigée autour du pignon (4) en amont vers le poste de chargement (K3), alors que la chaîne (C12), sortant au niveau de la position inférieure, réentre dans la chambre de congélation (1), traverse celle-ci longitudinalement avec un changement de direction au niveau de la partie inférieure de la première paire de rangées de pignons verticales (5, 6) de manière à agencer celle-ci au-dessus de l'autre chaîne (C3) et sortir dans un tel état de la chambre (1) en vue du changement de direction autour du pignon (11) en amont vers le poste de chargement (K12).

3. Transporteur selon les revendications précédentes, **caractérisé en ce que**, les rangées de pignons verticales (6, 7) internes à la chambre de congélation (1) sont ajustées sur des axes verticaux communs (15, 16), reliées par une transmission positive de mouvement (19 à 21) à un moto-réducteur centralisé (22), alors que les pignons des autres rangées verticales (5, 8) internes à ladite chambre sont montés sur des éléments coulissants respectifs (23, 24) supportés, avec la possibilité de coulisser horizontalement, par les structures de support (17, 18) internes aux trajets en spirale des chaînes, et lesdits éléments coulissants étant poussés par des moyens élastiques ou des systèmes de contrepoids respectifs (25, 26) tendant les diverses branches des chaînes (C3, C12).

4. Transporteur selon la revendication 3, **caractérisé en ce que**, conformément à une variante de construction, les rangées de pignons verticales (6, 7) sont actionnées au moyen de transmissions positives respectives de mouvement (19, 21', 20, 21) par des moto-réducteurs correspondants (22, 22') de sorte que les chaînes (C3, C12) peuvent avancer à des vitesses différentes.

5. Transporteur selon la revendication 1, **caractérisé en ce que**, les chaînes (C3, C12) à la sortie de la chambre de congélation (1) sont redirigées d'une telle manière que les plateaux (V3) d'une chaîne deviennent parallèles ou sensiblement parallèles à ceux (V12) de l'autre chaîne et **en ce que**, dans une telle condition, les mêmes plateaux sont saisis par les postes de déchargement respectifs (K3', K12').

6. Transporteur selon la revendication 1, **caractérisé en ce que** les chaînes (C3, C12) au niveau de la sortie de la chambre de congélation (1) sont redirigées de sorte que les plateaux (V3) d'une chaîne deviennent alignés ou sensiblement alignés avec ceux (V12) de l'autre chaîne et de sorte que dans cet état les mêmes plateaux sont saisis par les postes de déchargement respectifs (K3', K12').
